# EUROPÄISCHE PATENTSCHRIFT

(11) **EP 1 632 699 B1**
(45) Veröffentlichungstag und Bekanntmachung des Hinweises auf die Patenterteilung: **15.08.2007**
(21) Anmeldenummer: 05108025.7
(22) Anmeldetag: 01.09.2005
(51) Int. Cl.: F16K 11/07, F16K 47/02, F15B 13/04

(54) **Ventil mit funktionsintegrierter Steuerkolbendichtung**
Valve with function-integrated seal for pilot piston
Soupape avec un joint de piston de contrôle à fonction intégrée

(30) Priorität: 01.09.2004 DE 102004042224
(43) Veröffentlichungstag der Anmeldung: 08.03.2006
(73) Patentinhaber: Bosch Rexroth AG, 70184 Stuttgart (DE)
(72) Erfinder: Champouillon, Christophe, 74250 Peillonnex (FR); Balique, Chantal, 74130, Bonneville (FR)
(74) Vertreter: Kietzmann, Lutz

(56) Entgegenhaltungen:
- EP-A- 0 093 360
- DE-A1- 3 408 182
- DE-A1- 10 112 145
- DE-A1- 10 304 608
- GB-A- 1 265 234

## Beschreibung

Die Erfindung betrifft ein Ventil mit einem Ventilgehäuse und einer Bohrung zur Aufnahme eines Verteilerschiebers, der über einen endseitig ausgebildeten Steuerkolben längs bewegbar ist, der innerhalb einer korrespondierenden Steuerdruckkammer des Ventilgehäuses untergebracht ist, wobei eine Steuerkolbendichtung zur dynamischen Abdichtung der Steuerdruckkammer gegenüber dem längs bewegten Steuerkolben und der Steuerdruckkammer vorgesehen ist.

Derartige Ventile kommen üblicherweise in pneumatischen oder hydraulischen Einrichtungen zum Einsatz. Die Aufgabe der Ventile besteht darin, große Druckmittelströme zu steuern und zu beeinflussen, so dass das Druckmedium dosiert und zum richtigen Zeitpunkt den angeschlossenen Einrichtungen zugeführt wird. Das Öffnen und Schließen der einzelnen Druckmittelanschlüsse erfolgt dabei über die axiale Bewegung eines Ventils mit einem endseitig ausgebildetem Steuerkolben, siehe z.B. DE 3408182 A1.

Aus dem Lehr- und Informationsbuch "Pneumatik Grundlagen, Der Pneumatiktrainer Band 1" (Mannesmann Rexroth Pneumatik GmbH, Ing.-Büro J.P. Hasebrink, Druck- Nr. RD00296/12.91, 1991) ist ein oberbegriffliches Ventil mit Ventilgehäuse zur Aufnahme eines Verteilerschiebers bekannt, bei dem verschiedene Arten zur Erzeugung der Bewegung des Verteilerschiebers unterschieden werden. Der Verteilerschieber kann entweder manuell, mechanisch, elektrisch oder pneumatisch betätigt werden. Für die pneumatische Betätigung des Verteilerschiebers befindet sich endseitig am Verteilerschieber eine Steuerdruckkammer im Gehäuse des Ventils, in der der endseitig am Verteilerschieber ausgebildete Steuerkolben in der Steuerdruckkammer axial beweglich ist.

Am Steuerkolben ist eine Steuerkolbendichtung zur dynamischen Abdichtung des Steuerkolbens im Gehäuse des Ventils vorgesehen. Wie der oben genannten Druckschrift zu entnehmen ist, werden derartige Dichtungen am Steuerkolben des Verteilerschiebers in eine Rille eingesetzt. Zur Herstellung dieser Dichtungsrille ist meist eine spanende Fertigung am Steuerkolben erforderlich.

Allgemein bekannt sind daneben auch Elemente zur Endlagendämpfung des Verteilerschiebers. Die Endlagendämpfung dämpft den Endanschlag des Verteilerschiebers.

In den bekannten Ausführungen besteht die Endlagendämpfung meist aus einer einzelnen Planscheibe, die in die Bodenfläche der Steuerkammer eingesetzt und befestigt wird.

Bei der hier interessierenden Steuerkolbendichtung tritt das Problem auf, dass für den Einsatz einer dynamischen Dichtung zwischen dem Steuerkolben und der Steuerkammer durch eine spanende Fertigung am Steuerkolben eine Rille angebracht werden muss, in die die Dichtung eingesetzt wird. Die spanende Fertigung erfordert insbesondere hinsichtlich der Rillentiefe eine hohe Genauigkeit, um über die Tiefe der Rille das Verhältnis zwischen auftretender Reibung und der Dichtwirkung zu optimieren. Weiterhin ist eine aufwendige Behandlung der Teile erforderlich, um zu vermeiden, dass bei der spanenden Fertigung Späne in der Rille verbleiben. Durch die Fertigung der Rille und durch den Einsatz eines Dichtrings in die Rille erhöht sich die Anzahl der Fugen und Ritzen am Verteilerschieber, die sich im langfristigen Betrieb des Ventils nachteilig auswirken, da sich Verunreinigungen in den Schnittstellen und Übergängen im Sitz der Dichtung ablagern können.

Weiterhin kann nach längeren Stillstandszeiten eine Verklemmung des Dichtungskolben auf der Lauffläche der Steuerkammer auftreten, da die Nachgiebigkeit des Dichtringes aufgrund des kleinen Querschnittes gering ist. Daher muss mit einem gegenüber dem gewöhnlichen Betrieb höheren Kraftaufwand der Verteilerschieber entklemmt werden, womit ein stör- und wartungsfreier Betrieb des Ventils nicht mehr gewährleistet ist.

Die Montage einer Dichtung auf einem Kolben erhöht die Verteilerlänge, was dem Ziel, die Gesamtabmaße des Ventils zu minimieren, entgegen wirkt.

Nachteilig hinsichtlich des Aufwands wirkt sich auch der separate Einsatz eines Dämpfungselements aus, da sich zusätzlich aufgrund der steigenden Anzahl der Einzelteile der Montageaufwand erhöht.

Es ist daher die Aufgabe der vorliegenden Erfindung, eine Steuerkolbendichtung zu schaffen, die verklemmungsfrei und reibungsarm den Steuerkolben gegen die Steuerdruckkammer abdichtet und die einen geringen Montageaufwand bedarf.

Diese Aufgabe wird ausgehend von einem Ventil mit Ventilgehäuse und Bohrung zur Aufnahme eines Verteilerschiebers gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Steuerkolbendichtung nach Art einer einteiligen Dichtungsscheibe ausgeführt ist, wobei der dynamisch dichtende Teil der Dichtungsscheibe durch eine radial umlaufende Dichtfläche gebildet wird, wobei ferner mindestens eine stirnseitig auf der Dichtungsscheibe zur Endlagendämpfung aufgebrachte stoßdämpfende Struktur vorgesehen ist.

Diese Lösung bietet den Vorteil, dass die Dichtungsscheibe für ihren Einsatz keine Rille erfordert und zugleich die Funktion der Endlagendämpfung übernehmen kann. Durch die eingesparte Rille entfällt die spanende Fertigung, die aufwendige Qualitätskontrolle der genauen Einhaltung der Rillentiefe und die Spanbildung als Fehlerquelle werden damit eingespart. Gleichzeitig reduziert sich die Anzahl an Fugen und Ritzen im Verteilerschieber, in denen sich Verunreinigungen ablagern können und damit weitere Fehlerquellen im Betrieb des Ventils ausgeschlossen werden.

Durch die stoßdämpfenden Strukturen auf der Planfläche der Dichtungsscheibe wird als weiterer Vorteil eine separate Endlagendämpfung eingespart, wodurch sich die Anzahl an Einzelteilen reduziert und damit das Qualitätsniveau der Gesamtkonstruktion erhöht wird. Die einteilige Konstruktion mit den Funktionen Dichtung und Dämpfung reduziert das Bauvolumen des Verteilerschiebers und damit des gesamten Ventils, was einen weiteren Schritt zur Miniaturisierung pneumatischer Geräte bedeutet. Weiterhin entfällt mindestens ein Montageschritt, wodurch die Herstellkosten reduziert werden können, da auf eine aufwendige Vormontage verzichtet werden kann.

Eine weitere die Erfindung verbessernde Maßnahme sieht vor, dass auf der Planfläche der Dichtungsscheibe mindestens eine radial nach außen verlaufende Kanalstruktur zur Strömungsoptimierung der einströmenden Steuerluft mit mindestens einer stoßdämpfenden Struktur zur Endlagendämpfung ineinander übergehend aufgebracht ist. Vorteilhaft bei dieser Maßnahme ist die Führung der einströmenden Steuerluft durch Kanäle, die die Planfläche der Dichtungsscheibe ausweist. Hiermit werden Geräusche bei der Einströmung der Steuerluft minimiert und Schwingungsbewegungen in der Dichtungsscheibe reduziert.

Für den Betrieb des Verteilerschiebers ist es von Vorteil, dass die Dichtungsscheibe zur Selbstentklemmung der dynamischen Dichtfläche in der Steuerdruckkammer wölbbar ist und dass die radiale Nachgiebigkeit des Materials ein Verklemmen der Dichtungsscheibe verhindert. Vorteilhaft bei dieser Eigenschaft ist das Selbstentklemmung der Dichtungsscheibe nach einer längeren Stillstandszeit. Die Dichtungsscheibe verformt sich dabei wie eine Blase, damit reduziert sich der Durchmesser der umlaufenden Dichtfläche und die Kontaktkraft zwischen der Dichtfläche der Dichtungsscheibe und der Steuerdruckkammer nimmt ab, was ein Lösen der Dichtungsscheibe unterstützt. Hierdurch wird ein unzulässiger Anstieg des Steuerdrucks vermieden.

Durch die hohe radiale Nachgiebigkeit kann ein Optimum zwischen minimaler Reibung und der Dichtwirkung zwischen dem Steuerkolben und der Steuerdruckkammer erreicht werden. Die Dichtungsscheibe ist in ihrer gesamten Struktur elastisch, damit ist die Änderung der Kontaktkraft der Dichtfläche in der Steuerdruckkammer bei einer radialen Stauchung der Dichtungsscheibe gering. Hierdurch ist im Betrieb eine konstante Kontaktkraft bei einer gleichzeitig zuverlässigen Dichtwirkung sichergestellt.

Es ist aus konstruktiven Gründen von besonderem Vorteil, dass mindestens ein stirnseitig auf der Dichtungsscheibe angeordneter Zapfen zur Zentrierung der Dichtungsscheibe am Steuerkolbenabschnitt des Verteilerschiebers dient, um ein Verdrehen und radiales Verschieben der Dichtungsscheibe zu verhindern. Damit wird der Vorteil erreicht, dass sich die Dichtungsscheibe nicht verdrehen kann und gewährleistet ist, dass die Dichtfläche im Betrieb immer mit einer festgelegten Position in Rotationsrichtung betrieben wird, um den Verschleiß der Dichtungsscheibe zu minimieren.

Eine weitere Maßnahme der Erfindung sieht vor, dass zwischen dem Steuerkolben des Verteilerschiebers und der Dichtungsscheibe eine Distanzscheibe zur Hubeinstellung angeordnet ist. Die Distanzscheibe zwischen dem Verteilerschieber und der Dichtungsscheibe bietet die Möglichkeit der Hubeinstellung, so dass bei einer dickeren Distanzscheibe der Hub reduziert und bei einer dünneren Distanzscheibe der Hub erweitert wird und den Erfindungsgegenstand für bereits existierende Ventilsysteme einsetzbar zu machen. Das ermöglicht, die Erfindung für bereits existierende Ventilsysteme zu nutzen.

Es ist aus konstruktiven Gründen von besonderem Vorteil, dass die Dichtungsscheibe aus dem Material Polyuretan besteht. Dieses Material bietet den Vorteil, dass es gegen die meisten Druckmedien und Schmierstoffe chemisch stabil ist und seine Materialeigenschaften nicht ändert. Zudem besitzt es eine Elastizität, mit der die genannte radiale Nachgiebigkeit sichergesellt ist. Dennoch ist die Nutzung anderer Materialien, solche wie Elastomere, kompatibel mit der Erfindung.

Weitere die Erfindung verbessernde Maßnahmen sind in den Unteransprüchen angegeben oder werden nachstehend gemeinsam mit der Beschreibung bevorzugter Ausführungsbeispiele der Erfindung anhand der Figuren näher dargestellt. Es zeigt:
- Fig. 1: den Aufbau eines Ventils mit Verteilerschieber mit einem endseitig ausgebildeten Steuerkolben und der Dichtungsscheibe,
- Fig.2: die Darstellung eines anderen Ausführungsbeispiels eines Ventils mit endseitig am Steuerkolben eingebauter Dichtungsscheibe, und
- Fig.3: die Draufsicht und den Querschnitt der Dichtungsscheibe.

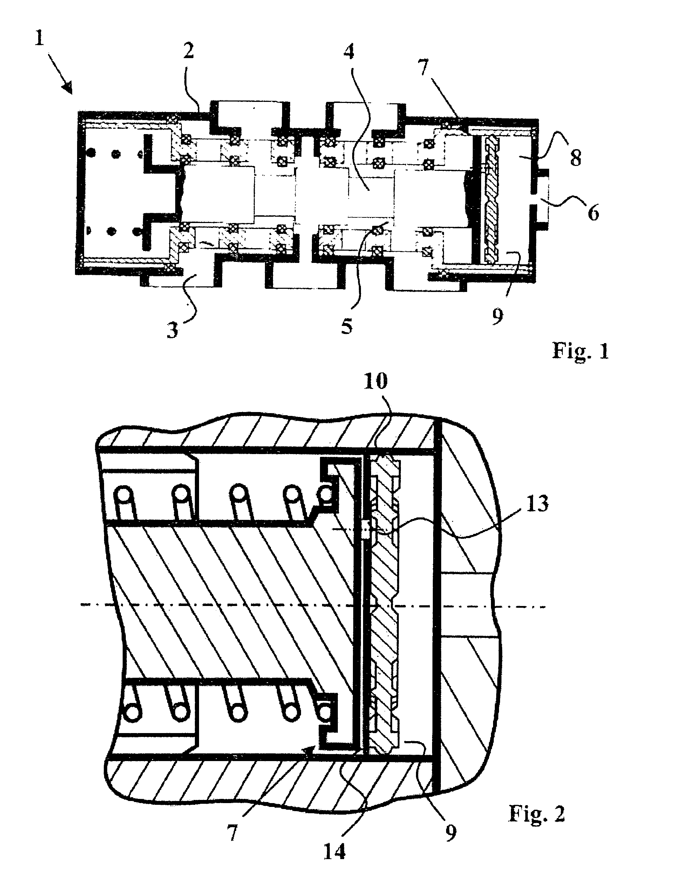

Das Ventil nach Figur 1 besteht aus einem Ventilgehäuse 2, welches mehrere Arbeitsdruckanschlüsse 3 aufweist. Im Ventilgehäuse 2 befindet sich längs beweglich ein Verteilerschieber 4, der durch seine axiale Bewegung über mindestens einen Ventilsitz 5 den Druckmittelstrom zwischen den einzelnen Arbeitsdruckanschlüssen 3 öffnen, schließen und drosseln kann. Durch die axiale Bewegung des Verteilerschiebers 4 ändert sich die Lage der einzelnen Sitze 5, womit der Strömungsquerschnitt zwischen dem Ventilgehäuse und dem Sitz verändert bzw. gestoppt werden kann. Die Bewegung des Verteilerschiebers 4 wird in diesem Ausführungsbeispiel pneumatisch betätigt, indem die Betätigungskraft zur axialen Verschiebung entsprechend endseitig in den Verteilerschieber 4 eingeleitet wird. Bei der pneumatischen Betätigung des Verteilerschiebers 4 wird der Arbeitsdruck über die Arbeitsdruckanschlüsse 3 mit einem Steuerdruck über den Steuerdruckanschluss 6 geschaltet, indem die axiale Bewegung des Verteilerschiebers 4 durch die Beaufschlagung des endseitig am Verteilerschiebers 4 ausgebildeten Steuerkolben 7 mit einem Steuerdruck hervorgerufen wird.

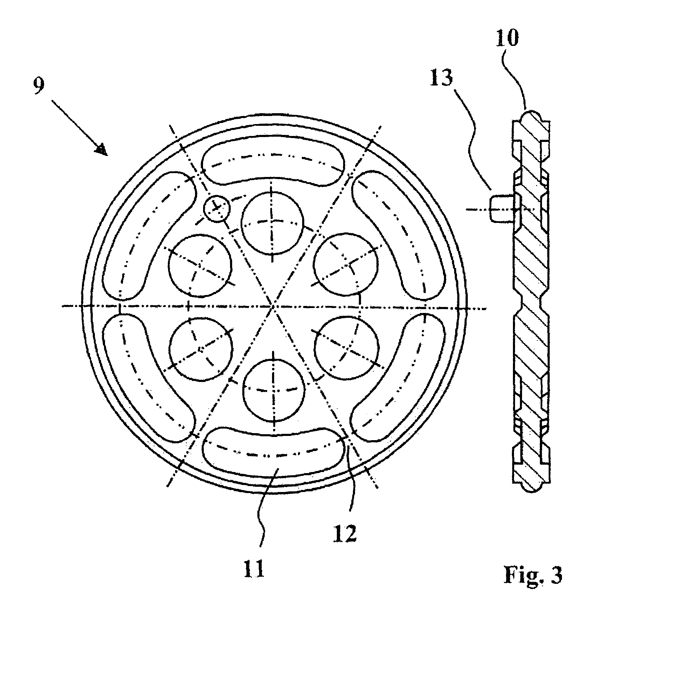

Wie in Figur 2 zu sehen, beinhaltet das Ventil 1 mit Ventilgehäuse 2 die Steuerdruckkammer 8, in der der endseitig am Verteilerschieber 4 angebrachte Steuerkolben 7 axial beweglich eingebaut ist. Die Steuerdruckkammer 8 weist einen Steuerdruckanschluss 6 für den Steuerdruck auf. Zur Abdichtung des Druckes zwischen der Steuerdruckkammer 8 und dem Steuerkolben 7 befindet sich die Dichtungsscheibe 9 endseitig am Steuerkolben 7. Die Dichtungsscheibe 9 dichtet über eine radial umlaufende als Wölbung ausgebildete Dichtfläche 10 die Steuerdruckkammer 8 ab. Die Dichtfläche 10 ist symmetrisch ausgebildet, so dass ein optimales Dichtverhalten in beiden axialen Bewegungsrichtungen des Verteilerschiebers 4 gewährleistet ist.

Die Dichtungsscheibe 9 weist einen durchgehenden Plankörper auf, so dass diese nicht in eine Rille eingesetzt wird, sondern plan vor dem Steuerkolben 7 positioniert wird. Durch die plane Anordnung der Dichtungsscheibe 9 vor dem Steuerkolben 7 kann sich die Dichtungsscheibe 9 auswölben, womit eine Entklemmung der Dichtungsscheibe 9 nach einer längeren Stillstandszeit vermieden wird.

Zwischen der Dichtungsscheibe 9 und dem Steuerkolben 7 befindet sich eine Distanzscheibe 14. Mit der Distanzscheibe 14 kann der Hub des Verteilerschiebers 4 eingestellt werden. Dabei bewirkt eine große Dicke der Distanzscheibe 14 einen kleineren und eine kleine Dicke einen großen Hub.

Nach Figur 3 befindet sich auf der Planfläche der Dichtungsscheibe 9 eine stoßdämpfende Struktur 11, die eine Endlagendämpfung des -hier nicht weiter dargestellten-Verteilerschiebers 4 bewirkt. Diese Endlagendämpfung geht somit einteilig in die Dichtungsscheibe 9 über, so dass mit einem Bauteil beide Funktionen erfüllt sind.

Die Zwischenräume der stoßdämpfenden Struktur 11 weisen eine Kanalstruktur 12 auf, die das Einströmen der Steuerluft aus dem Steuerdruckanschluss 6 begünstigen und eine Flatterbewegung der Dichtungsscheibe 9 durch die Strömungsdynamik reduzieren.

Die Dichtungsscheibe 9 weist einen einseitig auf der Planfläche angebrachten Zapfen 13 auf, der in die Planfläche des Steuerkolbens 7 einhakt. Damit wird ein Verdrehen und radiales Verschieben der Dichtungsscheibe 9 verhindert.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Ventil
- **2**: Ventilgehäuse
- **3**: Arbeitsdruckanschluss
- **4**: Verteilerschieber
- **5**: Sitz
- **6**: Steuerdruckanschluss
- **7**: Steuerkolben
- **8**: Steuerdruckkammer
- **9**: Dichtungsscheibe
- **10**: Dichtfläche
- **11**: Stoßdämpfende Struktur
- **12**: Kanalstruktur
- **13**: Zapfen
- **14**: Distanzscheibe

## Patentansprüche

1. Ventil **(1)** mit einem Ventilgehäuse **(2)** und einer Bohrung zur Aufnahme eines Verteilerschiebers **(4),** der über einen endseitig ausgebildeten Steuerkolben **(7)** längs bewegbar ist, der innerhalb einer korrespondierenden Steuerdruckkammer **(8)** des Ventilgehäuses **(2)** untergebracht ist, wobei eine Steuerkolbendichtung zur dynamischen Abdichtung der Steuerdruckkammer **(8)** gegenüber dem längs bewegten Steuerkolben **(7)** und der Steuerdruckkammer **(8)** vorgesehen ist,
**dadurch gekennzeichnet, dass** die Steuerkolbendichtung nach Art einer einteiligen Dichtungsscheibe **(9)** ausgeführt ist, wobei der dynamisch dichtende Teil der Dichtungsscheibe **(9)** durch eine radial umlaufende Dichtfläche **(10)** gebildet wird, wobei ferner mindestens eine stirnseitig auf der Dichtungsscheibe **(9)** zur Endlagendämpfung aufgebrachte stoßdämpfende Struktur **(11)** vorgesehen ist.

2. Ventil gemäß Anspruch 1,
**dadurch gekennzeichnet, dass** auf der Stirnseite der Dichtungsscheibe **(9)** mindestens eine radial nach außen verlaufende Kanalstruktur **(12)** zur Strömungsoptimierung der in die Steuerdruckkammer **(8)** einströmenden Steuerluft mit mindestens einer stoßdämpfenden Struktur **(11)** zur Endlagendämpfung ineinander übergehend aufgebracht ist.

3. Ventil gemäß Anspruch 1 oder 2,
**dadurch gekennzeichnet, dass** die Dichtungsscheibe **(9)** zur Selbstentklemmung der dynamischen Dichtfläche **(10)** an der Innenwand der Steuerdruckkammer **(8)** wölbbar ist.

4. Ventil gemäß Anspruch 3,
**dadurch gekennzeichnet, dass** die Dichtungsscheibe **(9)** materialbedingt eine radiale Nachgiebigkeit aufweist, um ein Verklemmen in der Steuerdruckkammer **(8)** zu vermeiden.

5. Ventil gemäß Anspruch 1,
**dadurch gekennzeichnet, dass** mindestens ein stirnseitig auf der Dichtungsscheibe **(9)** angeordneter Zapfen **(13)** zur Zentrierung der Dichtungsscheibe **(9)** am Steuerkolben **(7)** des Verteilerschiebers **(4)** dient, um ein Verdrehen und radiales Verschieben der Dichtungsscheibe **(9)** zu verhindern.

6. Ventil gemäß Anspruch 1,
**dadurch gekennzeichnet, dass** zwischen dem Steuerkolben **(7)** des Verteilerschiebers **(4)** und der Dichtungsscheibe **(9)** eine Distanzscheibe **(14)** zur Hubeinstellung angeordnet ist, um die Dichtungsscheibe **(9)** an bereits existierende Ventilsysteme anpassbar zu machen.

7. Ventil gemäß Anspruch 1,
**dadurch gekennzeichnet, dass** die Dichtungsscheibe **(9)** aus dem Material Polyurethan oder aus einem Elastomer besteht.

## Claims

1. A valve (1) with a valve housing (2) and a bore for receiving a distributing slider (4) axially moveable by means of a control piston (7) formed at the end and accommodated within a corresponding control pressure chamber (8) of the valve housing (2), wherein a control piston seal is provided for dynamically sealing the control pressure chamber (8) with respect to the axially moving control piston (7) and the control pressure chamber (8),
**characterised in that** the control piston seal is implemented in the manner of a single-piece sealing disk (9), wherein the dynamically sealing portion of the sealing disk (9) is formed as a radial circumferential sealing surface (10), wherein further at the end at least one shock-absorbing structure (11) applied on the sealing disk (9) is provided for end-of-travel impact damping.

2. The valve according to claim 1,
**characterised in that** at least one channel structure (12) extending radially toward the outside with at least one shock-absorbing structure (11) for end-of-travel impact damping is applied on the end surface of the sealing disk (9) for flow optimisation of the control air flowing into the control pressure chamber (8) in a contiguous manner.

3. The valve according to claim 1 or 2,
**characterised in that** the sealing disk (9) is able to buckle to provide an auto release feature of the dynamic sealing surface (10) from the inner wall of the control pressure chamber (8).

4. The valve according to claim 3,
**characterised in that** the sealing disk (9) is radially flexible due to the material used to avoid jamming in the control pressure chamber.

5. The valve according to claim 1,
**characterised in that** at least one stud (13) arranged on the end of the sealing disk (9) serves to center the sealing disk (9) on the control piston (7) of the distribution slider (4) to avoid rotation and radial displacement of the sealing disk (9).

6. The valve according to claim 1,
**characterised in that** a spacer disk (14) is arranged between the control piston (7) of the distribution slider (4) and the sealing disk (9) for stroke length adjustment to make the sealing disk (9) adaptable to existing valve systems.

7. The valve according to claim 1,
**characterised in that** the sealing disk (9) is of a polyurethane or elastomeric material.

## Revendications

1. Vanne (1) comprenant un boîtier de vanne (2) et un perçage pour recevoir un tiroir distributeur (4) qui est déplaçable en sens longitudinal via un piston de commande (7) réalisé du côté terminal, et qui est logé à l'intérieur de la chambre à pression de commande (8) correspondante du boîtier de vanne (2), et il est prévu un joint de piston de commande pour l'étanchement dynamique de la chambre à pression de commande (8) par rapport au piston de commande (7) en déplacement longitudinal et la chambre a pression de commande (8),
**caractérisée en ce que** le joint de piston de commande est réalisé à la manière d'un disque d'étanchement (9) d'un seul tenant, la partie du disque d'étanchement (9) assurant un étanchement dynamique est formée par une surface d'étanchement périphérique radiale (10), et il est en outre prévu au moins une structure (11) pour l'amortissement de chocs, montée du côté frontal sur le disque d'étanchement (9) pour l'amortissement de fin de course.

2. Vanne selon la revendication 1,
**caractérisée en** en ce que, sur le côté frontal du disque d'étanchement (9), est montée au moins une structure de canal (12) qui s'étend radialement vers l'extérieur en vue de l'optimisation de l'écoulement de l'air de commande qui s'écoule en entrant dans la chambre à pression de commande (8), avec au moins une structure (11) pour l'amortissement de chocs, en vue de l'amortissement de fin de course, lesdites structures se transformant l'une dans l'autre.

3. Vanne selon la revendication 1 ou 2,
**caractérisée en ce que** le disque d'étanchement (9) est susceptible d'être bombé en vue d'un décoincement automatique de la surface d'étanchement dynamique (10) sur la paroi intérieure de la chambre à pression de commande (8).

4. Vanne selon la revendication 3,
**caractérisée en ce que** le disque d'étanchement (9) présente, en raison de son matériau, une souplesse radiale, pour éviter un coincement dans la chambre à pression de commande (8).

5. Vanne selon la revendication 1,
**caractérisée en ce qu'**il est prévu au moins un tenon (13) agencé du côté frontal sur le disque d'étanchement (9), pour servir au centrage du disque d'étanchement (9) sur le piston de commande (7) du tiroir distributeur (4), afin d'empêcher une rotation et un déplacement radial du disque d'étanchement (9).

6. Vanne selon la revendication 1,
**caractérisée en ce qu'**il est prévu un disque d'écartement (14) pour le réglage de course, agencé entre le piston de commande (7) du tiroir distributeur (4) et le disque d'étanchement (9), afin de rendre le disque d'étanchement (9) adaptable à des systèmes de vanne déjà existants.

7. Vanne selon la revendication 1,
**caractérisée en ce que** le disque d'étanchement (9) est réalisé en polyuréthanne ou en élastomère.
